# FASCICULE DE BREVET EUROPEEN

(11) **EP 3 110 989 B1**
(45) Date de publication et mention de la délivrance du brevet: **04.11.2020**
(21) Numéro de dépôt: 15711250.9
(22) Date de dépôt: 24.02.2015
(51) Int. Cl.: C25D 11/02, B32B 7/12, B64C 11/20, C25D 11/18, C25D 11/26, F01D 5/28

(54) **BORD DE PROTECTION D'AUBE ET SON PROCEDE DE FABRICATION**
SCHUTZKANTE FÜR EINE SCHAUFEL UND VERFAHREN ZUR HERSTELLUNG DIESER KANTE
PROTECTIVE EDGE FOR A BLADE AND METHOD OF MANUFACTURING SAID EDGE

(30) Priorité: 25.02.2014 FR 1451482
(43) Date de publication de la demande: 04.01.2017
(73) Titulaire: Safran Aircraft Engines, 75015 Paris (FR)
(72) Inventeur: COTINOT, Jérémie, Christian, André, F-77550 Moissy-Cramayel Cedex (FR); VIOLA, Alain, 67870 GRIESHEIM PRES MOLSHEIM (FR)
(74) Mandataire: Cabinet Beau de Loménie
(86) Numéro de dépôt international: PCT/FR2015/050439
(87) Numéro de publication internationale: WO 2015/128575

(56) Documents cités:
- FR-A1- 2 877 018
- US-A1- 2002 174 940
- US-A1- 2006 016 690

## Description

### DOMAINE DE L'INVENTION

L'invention concerne un bord de protection d'aube et son procédé de fabrication. Il peut s'agir, en particulier, d'un bord de protection d'une aube de turbomachine.

### ETAT DE LA TECHNIQUE ANTERIEURE

Dans le domaine de l'aéronautique et plus particulièrement celui des turboréacteurs d'avion, diminuer la masse des éléments constitutifs du turboréacteur est une préoccupation constante. Cette préoccupation a conduit au développement d'aubes de soufflante ou de redresseur fabriquées en matériau composite à matrice organique, ces aubes composites étant plus légères que les aubes métalliques.

Le bord d'attaque des aubes composites est généralement trop sensible à l'érosion et aux chocs éventuels (oiseaux, graviers, glace, sable, etc.) pour être utilisé sans protection. Aussi, il est fréquent d'utiliser un bord de protection, métallique ou plastique, collé sur le corps de l'aube. C'est alors ce bord de protection qui définit le bord d'attaque de l'aube. Par exemple, le document de brevet WO2013021141 décrit un tel bord de protection.

L'adhérence du bord de protection sur le corps de l'aube est un aspect essentiel. Pour améliorer cette adhérence, selon une méthode connue, on dépose un certain nombre de couches intermédiaires, e.g. un film de polyuréthane ou un primaire de collage, entre le corps et le bord de renforcement de l'aube. Selon une autre méthode, on prépare mécaniquement, par exemple par sablage ou grattage, les surfaces à coller. Bien que satisfaisantes, ces méthodes sont jugées trop longues, trop complexes et/ou trop onéreuses à fabriquer. En outre, les couches intermédiaires précitées peuvent contenir certaines substances considérées comme nocives pour l'environnement et en voie de retrait par les institutions internationales (telles que le système REACH en Europe).

Il existe donc un besoin pour un nouveau type de bord de protection qui protège efficacement l'aube tout en étant facile à fixer sur le corps de celle-ci.

### PRESENTATION DE L'INVENTION

L'invention a pour objet tout d'abord le procédé de fabrication d'un bord de protection d'aube destiné à former un bord d'attaque d'aube qui est défini par la revendication 1. Suivant ce procédé, on fournit un bord de protection en métal anodisable et on soumet ce bord de protection à un traitement électrolytique d'oxydation micro-arc, qui est appliqué à la fois à la face interne et à la face externe du bord de protection.

Le traitement électrolytique d'oxydation micro-arc est une technique de traitement de surface, connue en elle-même, qui consiste à immerger un substrat dans un bain électrolytique et à anodiser ce substrat avec une tension élevée afin d'atteindre la tension de claquage de la couche d'oxyde isolante initialement formée à la surface du substrat dans les premiers instants du traitement. Des micro-arcs s'amorcent alors et se déplacent sur la surface immergée du substrat. Cette technique permet de créer à la surface du substrat un revêtement ayant une structure et des propriétés physico-chimiques particulières par le biais de la formation d'une couche d'oxyde composée des éléments constitutifs du substrat, d'une part, et de l'incorporation à la couche d'oxyde d'espèces chimiques présentes initialement dans le bain électrolytique d'autre part. A l'issu du traitement, le revêtement obtenu présente une structure dense et dur à cœur et poreuse en surface. Cette technique est également appelée dans la littérature « traitement d'oxydation par plasma micro-arc » ou, plus simplement, « traitement d'oxydation micro-arc ».

L'oxydation micro-arc est un procédé bien distinct des procédés d'anodisation traditionnels. Il se distingue de ceux-ci notamment par l'importante quantité importante d'énergie mise en œuvre, qui est nécessaire pour atteindre la tension de claquage de la couche d'oxyde.

La réalisation d'un revêtement de surface par oxydation micro-arc conduit à la formation d'un revêtement spécifique, ayant une micro-structure spécifique bien distincte de celle d'un revêtement obtenu par anodisation traditionnelle.

L'oxydation micro-arc ne nécessite pas d'apport de métal pour la formation du revêtement. Le revêtement formé est obtenu par oxydation du métal (ou des espèces métalliques) présentes en surface du substrat soumis au traitement d'oxydation micro-arc.

Dans l'application proposée, le bord de protection est utilisé comme substrat et le traitement d'oxydation micro-arc permet de former à la surface du bord de protection un revêtement qui, d'une part, est dense et dur à cœur et, d'autre part, poreux en surface. La dureté de ce revêtement permet de protéger efficacement l'aube contre l'érosion ou d'éventuels impacts, tandis que la porosité superficielle du revêtement facilite et améliore la fixation du revêtement, en particulier lorsqu'il est fixé par collage, en fournissant une bonne accroche pour l'adhésif utilisé.

Le bord de protection peut-être en particulier, en titane, en alliage de titane, en aluminium ou en alliage d'aluminium. Lorsque le bord de protection est en titane ou en alliage de titane, le revêtement formé sur le bord de protection est composé en majorité d'oxyde de titane.

Pour assurer la protection de l'aube, la face interne du bord de protection est configurée de manière à pouvoir être collée sur un corps d'aube pour former alors le bord d'attaque de l'aube.

Le bord de protection a une face externe et une face interne opposées, la face externe étant configurée pour définir une surface aérodynamique de l'aube, et la face interne étant configurée pour être fixée sur le corps de l'aube.

Lors de la mise en œuvre du procédé selon l'invention, le traitement d'oxydation micro-arc est normalement appliqué sur toutes les surfaces externes du bord de protection, et donc aussi bien sur la face externe que sur la face interne.

Or, les exigences en matière de propriétés de surface sont différentes sur ces deux faces du bord de protection d'aube.

Sur la face externe, le bord de protection d'aube doit de préférence à la fois être très lisse pour des raisons aérodynamiques, et présenter une grande résistance à l'usure pour résister aux chocs avec les particules présentes dans l'atmosphère.

Le revêtement de surface obtenu par oxydation micro-arc présente généralement une certaine rugosité : Aussi a priori, un tel revêtement ne semble pas du tout adapté pour une surface devant constituer le bord d'attaque ou le bord de fuite d'une aube.

Ou du moins, lorsque ce revêtement présente la rugosité nécessaire pour permettre le collage d'une pièce, cette rugosité tend alors généralement à rendre le revêtement incompatible avec les exigences aérodynamiques, qui imposent au contraire que la surface soit particulièrement lisse.

Aussi dans un mode de mise en œuvre, avantageusement la face externe du bord de protection est polie après le traitement d'oxydation micro-arc. Ce polissage lui permet alors d'atteindre un niveau de rugosité conforme à un certain niveau d'exigences aérodynamiques.

Le polissage peut notamment être réalisé de telle sorte que le niveau de rugosité de la face externe du bord de protection soit inférieur à 2 µm et préférentiellement à 0,8 µm.

De plus, après polissage la structure dense et dure du revêtement se retrouve en surface. Avantageusement, cette partie du revêtement présente une résistance à l'usure particulièrement élevée.

Inversement, sur la face interne du bord de protection, la couche superficielle du revêtement formé par oxydation micro-arc présente des qualités de porosité superficielle et de rugosité de la face interne tout-à-fait adaptées pour le collage de cette face sur l'aube. Aussi, cette couche superficielle peut être conservée afin de favoriser l'adhérence physico-chimique (e.g. le collage) du bord de protection sur le corps de l'aube. En particulier, la face interne peut de préférence ne pas être polie après le traitement d'oxydation micro-arc. La composition du bain électrolytique utilisé lors du traitement peut également être choisie pour que la surface poreuse de la face interne incorpore des espèces chimiques particulières favorisant l'adhérence physico-chimique.

Après l'étape d'oxydation micro-arc, suivie éventuellement d'une étape de polissage, le bord de protection est collé sur un corps d'aube. Le bord de protection forme alors le bord d'attaque ou le bord de fuite de l'aube.

Dans certains modes de réalisation, le traitement électrolytique d'oxydation micro-arc comprend les étapes suivantes :
- on immerge le bord de protection dans un bain électrolytique, le bord de protection formant une première électrode,
- on immerge une deuxième électrode (également appelée contre-électrode) dans le bain électrolytique, et
- on applique aux première et deuxième électrodes une tension.

De préférence, lorsque l'on applique cette tension, on impose un courant. En d'autres termes, l'opération d'oxydation micro-arc est pilotée notamment en régulant l'intensité du courant imposé.

De préférence, l'intensité appliquée présente des impulsions, en particulier lorsque le bord de protection est formé de titane ou d'alliage de titane. De préférence, la fréquence de ces impulsions est inférieure à 50 Hertz.

La deuxième électrode peut être disposée dans le bain électrolytique en face de la face interne du renfort, afin de faciliter le traitement de cette face interne qui présente généralement une géométrie moins favorable au traitement que la face externe. Typiquement, la face interne du renfort est concave (i.e. en creux), tandis que la face externe est convexe (i.e. bombée).

Il peut présenter une section transversale sensiblement en forme de U afin d'être positionné à cheval sur le corps de l'aube. Ce renfort peut présenter une base qui constitue la partie la plus épaisse du bord de protection. La face externe de cette base peut définir le bord d'attaque (ou le bord de fuite) de l'aube. Cette base peut être prolongée par deux flancs latéraux situés respectivement du côté d'intrados et d'extrados de l'aube. Les faces externes de ces flancs définissent respectivement, en partie, les faces d'intrados et d'extrados de l'aube. En section transversale, le profil de ces flancs peut s'amincir à mesure que l'on s'éloigne de la base. Le bord de protection peut être fixé sur le corps de l'aube, sur toute ou partie de la hauteur de celui-ci.

L'invention a également pour objet un bord de protection fabriqué selon le procédé décrit plus haut et une aube comprenant un tel bord de protection. Il peut s'agir d'une aube de turbomachine, en particulier une aube de soufflante de turbomachine aéronautique (e.g. de turboréacteur d'avion). Il pourrait également s'agir d'une aube, ou pale, d'hélice.

L'aube peut comprendre un corps, ou partie centrale, en matériau composite à matrice organique. Il peut s'agir, par exemple, d'une aube composite obtenue par drapage d'un matériau tissé. Toujours à titre d'exemple, le matériau composite utilisé peut être composé par un assemblage de fibres de carbone/plastique tissées et d'une matrice résineuse (e.g. une matrice de résine époxy, bismaléimide ou cyanate-ester), l'ensemble étant formé par moulage, e.g. au moyen d'un procédé d'injection de résine sous vide de type RTM (pour « Resin Transfer Molding »).

Le bord de protection peut être fixé sur la partie centrale, en particulier par collage, et définir le bord d'attaque ou le bord de fuite de l'aube.

Les caractéristiques et avantages de l'invention précités, ainsi que d'autres, apparaîtront à la lecture de la description détaillée qui suit, d'exemple(s) de réalisation de l'invention. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention.

Sur ces dessins, d'une figure (FIG) à l'autre, des éléments (ou parties d'élément) analogues sont repérés par les mêmes signes de référence.
La FIG 1 est une vue latérale d'une aube comprenant un bord de protection.
La FIG 2 est une vue partielle l'aube de la FIG 1, en coupe selon le plan de coupe transversal A-A.
La FIG 3 est une vue générale d'une installation de traitement électrolytique d'oxydation micro-arc.
La FIG 4 est une vue schématique présentant les impulsions d'intensité appliquées dans un mode de mise en œuvre de l'invention.
La FIG 5 représente schématiquement, en coupe, la structure d'un exemple de revêtement créé par le traitement électrolytique d'oxydation micro-arc sur le substrat.

### DESCRIPTION DETAILLEE D'EXEMPLES DE REALISATION

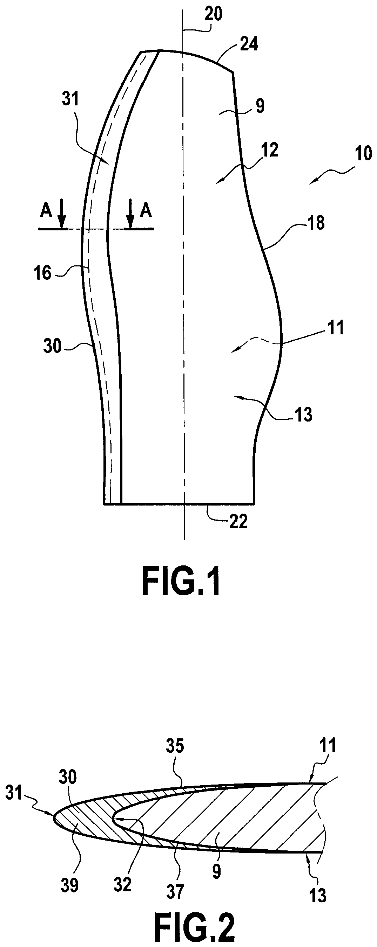

Les FIGS 1 et 2 représentent une aube 10 de turbomachine. Il peut s'agir d'une aube de soufflante de turboréacteur d'avion. Cette aube 10 est destinée à être située dans le flux de fluide traversant la turbomachine. L'amont et l'aval sont définis par rapport au sens d'écoulement normal de ce fluide.

La surface aérodynamique 12 de l'aube s'étend, de l'amont vers l'aval, entre un bord d'attaque 16 et un bord de fuite 18, et selon une direction longitudinale 20 entre un pied 22 et un sommet 24. L'aube 10 est fixée par son pied 22 à un disque porteur rotatif, commun à plusieurs aubes.

Les faces d'extrados 13 et d'intrados 11 sont les faces latérales de la surface aérodynamique 12 de l'aube qui relient le bord d'attaque 16 au bord de fuite 18.

L'aube 10 comprend un corps 9 sur lequel est fixé par collage un bord de protection 30. Ce bord de protection 30 s'étend sur toute la hauteur de la surface aérodynamique 12 de l'aube 10, suivant la direction longitudinale 20. Le bord de protection 30 présente une face externe 31 et une face interne 32 opposées. La face externe 31 du bord de protection 30 définit le bord d'attaque 16 et une partie des faces d'extrados 13 et d'intrados 11. Le reste des faces d'extrados 13 et d'intrados 11 et le bord de fuite 18 sont définis par le corps de l'aube 9. La face interne 32 du bord de protection 30 est au contact du corps 9.

Le bord de protection 30 présente une section sensiblement en forme de U et est positionné à cheval sur le bord du corps 9. Ce renfort présente une base 39 qui est la zone de plus grande épaisseur du renfort et qui définit le bord d'attaque 16. Cette base 39 est prolongée par deux flancs latéraux 35 et 37 situés respectivement du côté d'intrados et d'extrados de l'aube 10. Les flancs 35, 37 présentent, en section transversale (voir FIG 2), un profil qui s'amincit en direction du bord de fuite 18.

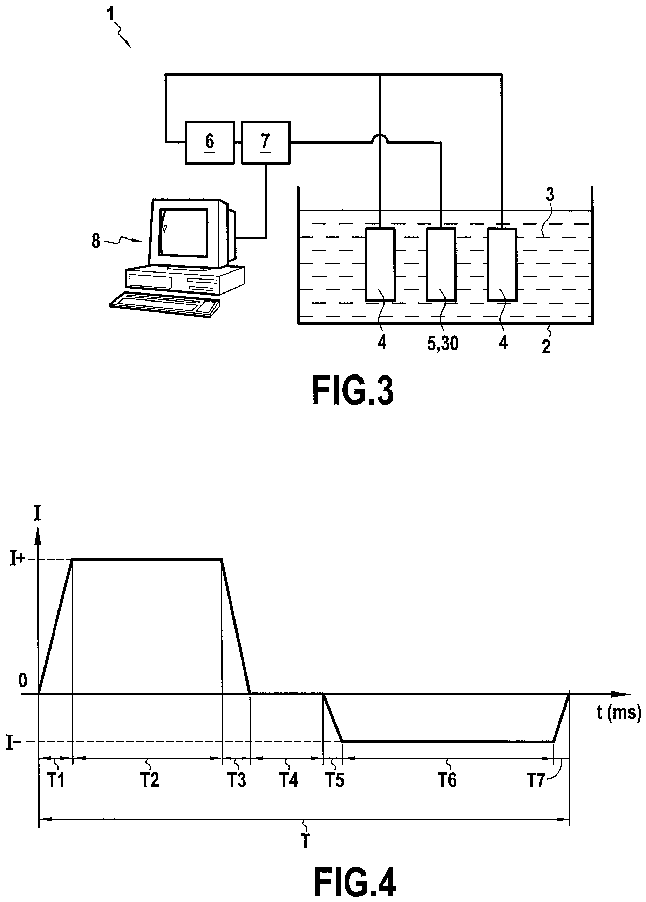

La FIG 3 représente schématiquement un exemple d'installation 1 de traitement électrolytique d'oxydation micro-arc. Cette installation comprend une cuve 2 contenant un bain électrolytique 3 ou électrolyte. Par exemple, ce bain électrolytique est constitué par une solution aqueuse d'hydroxyde de métal alcalin (e.g. potassium ou sodium) et d'un sel oxyacide d'un métal alcalin. A l'intérieur du bain électrolytique 3 plongent, d'une part, un substrat 5 formant une première électrode, réalisée en métal ou en alliage métallique et ayant des propriétés de semi-conducteur et, d'autre part, au moins une deuxième électrode 4 appelée « contre-électrode ». L'installation comprend également une source d'alimentation en courant 6, un générateur de tension 7 et des moyens de contrôle (par exemple, un micro-ordinateur 8) commandant et contrôlant les paramètres variables suivant les séquences du traitement. Les moyens de contrôle 8 permettent notamment de réguler l'intensité I du courant traversant le bain électrolytique. Cette installation permet de former un revêtement sur le substrat 5 par transformation du métal constitutif de ce substrat 5. Le fonctionnement général et le contrôle d'une telle installation étant connus de l'art antérieur, ils ne seront pas décrits plus en détail.

Dans le procédé proposé, le substrat 5 est formé par le bord de protection 30. Par exemple, le bord de protection 30 est en titane ou en alliage de titane. Les plages d'utilisations de l'installation 1 pour créer un revêtement sur ce bord de protection 30 sont, par exemple, les suivantes :
- Densité de courant: de 20 à 400 A/dm² ;
- Tension : de 200 à 1000 V, plus particulièrement de 400 à 800 V ;
- Fréquence des impulsions d'intensité : de 1 à 500 Hz, et de préférence de 10 à 500 Hz ;
- Rapport des charges q_{p/}qₙ : de 0,4 à 1,8 (qₚ étant la charge positive et qₙ la charge négative transmises) ;
- Durée du traitement : de 10 à 90 min ;
- Température du bain : de 5 à 40° C, et de préférence de 10 à 40° C ;
- pH du bain : de 6 à 14 ;
- Conductivité du bain : de 100 à 1000 mS/m.

Le bain électrolytique 3 peut comprendre de l'eau déminéralisée et un mélange de sels de potassium et/ou de sodium sous diverses formes telles que des hydroxydes, silicates, aluminates, phosphates, thiosulfates, tungstates, thiocyanathes ou encore vanadate, avec une composition comprise entre 0,1 et 50 g/l.

Pour faciliter le traitement de la face interne 32 du bord de protection 30, la deuxième électrode ou contre-électrode 4 peut être disposée face à cette face interne 32 et, en particulier, être disposée entre les flancs 35, 37 du bord de protection 30 et/ou présenter une géométrie semblable à la première électrode 5. Dans l'exemple de la FIG 3, deux contre-électrodes 4 sont utilisées et disposées de part et d'autre du bord de protection 30, très près de celui-ci.

Les dispositions suivantes sont prises pour augmenter l'efficacité du traitement d'oxydation micro-arc :
D'une part, des ultra-sons sont diffusés dans le bain électrolytique 3 pendant l'application du traitement.

D'autre part, l'intensité appliquée entre le substrat 5 et les électrodes 4 n'est pas une intensité continue, mais une intensité alternative variable, présentant des impulsions périodiques appliquées à des intervalles de temps de durée T. Cette durée T est choisie supérieure à 20 ms, par exemple 30 ms, afin que la fréquence des impulsions reste inférieure à 50 Hz.

Les variations en fonction du temps t de l'intensité I sont représentées sur la FIG. 4.

Chaque impulsion est bipolaire et comporte :
- une rampe de montée en intensité, de durée T1, faisant croître l'intensité de 0 jusqu'à une intensité de palier positif I+ ;
- un palier de durée T2 pendant lequel l'intensité reste égale à I+ ;
- une rampe de descente d'intensité, de durée T3, faisant décroître l'intensité de I+ à 0 ;
- un palier de durée T4 pendant lequel l'intensité reste égale à 0 ;
- une rampe de descente d'intensité, de durée T5, faisant décroître l'intensité de 0 jusqu'à une intensité de palier négatif I- ;
- un palier de durée T6 pendant lequel l'intensité reste égale à I- ;
- une rampe de montée en intensité, de durée T7, faisant croître l'intensité de I- à 0.

Dès qu'une impulsion est terminée, une nouvelle impulsion est appliquée.

Les intensités I+ et I- des paliers d'intensité positif et négatif ne sont pas nécessairement égales.

Les paliers positif et négatif sont séparés par un bref laps de temps de durée T4 durant lequel l'intensité appliquée est nulle.

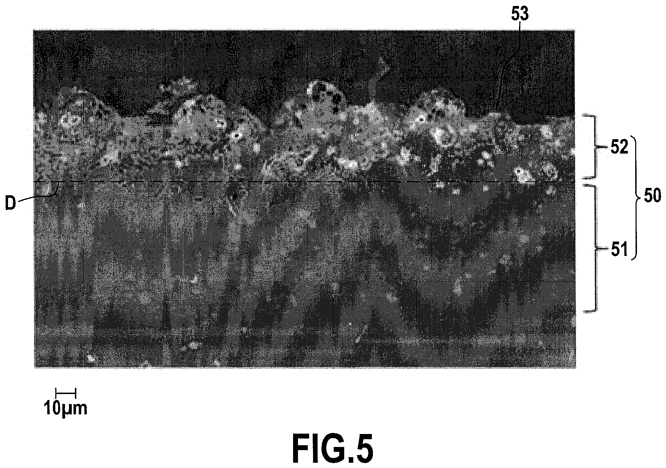

La FIG. 5 représente schématiquement, en coupe, la structure d'un exemple de revêtement 50 créé par le traitement électrolytique d'oxydation micro-arc sur le substrat 5. Dans cet exemple, le revêtement 50 présente une couche poreuse 52 superficielle et une couche plus dense 51 située entre la couche poreuse 52 et le substrat 5. La couche dense 51 est plus dense et plus dur que la couche poreuse 52. Comme illustré, la couche poreuse 52 présente une porosité relativement élevé et une surface externe 53 rugueuse.

Après le traitement électrolytique d'oxydation micro-arc, la face externe 31 du bord de protection 30 peut être polie, notamment par tribofinition ou au moyen de disques abrasifs en carbure de silicium classique ayant une granulométrie décroissante de 80 à 4000 grains par cm² ou équivalent. Par exemple, le niveau de rugosité souhaité pour la face externe 31 peut-être de l'ordre de 0,6 microns, ce qui correspond à un certain niveau d'exigences aérodynamiques. Cette étape de polissage, dans le cas du revêtement 50 de la FIG 4, revient à supprimer la couche poreuse 52, comme schématisé par la ligne pointillé D. La couche dense 51 se retrouve ainsi en surface et exposée.

La face interne 32 du bord de protection, elle, peut rester brute, i.e. ne pas être polie. Dans le cas du revêtement 50 de la FIG 4, ceci revient à préserver la structure multicouche représentée.

Ainsi, lorsque le bord de protection 30 présente un revêtement 50 du type de celui de la FIG 4, la face externe 31 du bord de protection 30 est définie par la face externe de la couche dense 51, délimitée par la ligne en pointillé D, tandis que la face interne 32 du bord de protection 30 est définie par la face externe 53 de la couche poreuse 52.

Le bord de protection 30 présente ainsi une face externe 31 dure et lisse, améliorant la protection de l'aube 10 et compatible avec un certain niveau d'exigences aérodynamiques, et une face interne 32 poreuse et rugueuse favorisant le collage du bord de protection 30 sur le corps 9 de l'aube 10.

Les modes ou exemples de réalisation décrits dans le présent exposé sont donnés à titre illustratif et non limitatif.

## Revendications

1. Procédé de fabrication d'un bord de protection destiné à former un bord d'attaque d'aube, dans lequel :
on fournit un bord de protection (30) en métal anodisable, le bord de protection ayant une face externe et une face interne opposées, la face externe étant configurée pour définir une surface aérodynamique de l'aube, et la face interne étant configurée pour être collée sur un corps de l'aube pour former le bord d'attaque de l'aube, et
on soumet ce bord de protection (30) à un traitement électrolytique d'oxydation micro-arc qui est appliqué à la fois à la face interne et à la face externe du bord de protection.

2. Procédé selon la revendication 1, dans lequel le bord de protection (30) a une face externe (31) définissant en partie la surface aérodynamique de l'aube (10), et dans lequel la face externe (31) est polie après le traitement électrolytique d'oxydation micro-arc.

3. Procédé selon la revendication 1 ou 2, dans lequel on colle le bord de protection (30) sur un corps (9) d'aube.

4. Procédé selon l'une quelconque des revendications 1 à 3, dans lequel le traitement électrolytique d'oxydation micro-arc comprend les étapes suivantes :
- on immerge le bord de protection (30) dans un bain électrolytique (3), le bord de protection formant une première électrode,
- on immerge une deuxième électrode (4) dans le bain électrolytique, et
- on applique aux première et deuxième électrodes une tension.

5. Procédé selon la revendication 4, dans lequel lorsque l'on applique la tension, on impose un courant dont l'intensité présente des impulsions.

6. Procédé selon la revendication 4 ou 5, dans lequel la deuxième électrode (4) est disposée dans le bain électrolytique (3) face à la face interne (32) du bord de protection.

7. Procédé selon l'une quelconque des revendications 1 à 6, dans lequel le bord de protection (30) est en en titane ou en alliage de titane.

8. Procédé selon l'une quelconque des revendications 1 à 7, dans lequel le corps (9) d'aube est formé en matériau composite à matrice organique.

9. Bord de protection fabriqué selon le procédé de l'une quelconque des revendications 1 à 8, ledit bord de protection en métal anodisable ayant une face externe et une face interne opposées, la face externe étant configurée pour définir une surface aérodynamique de l'aube, et la face interne étant configurée pour être collée sur un corps de l'aube pour former le bord d'attaque de l'aube.

10. Aube comprenant un bord de protection selon la revendication 9 et un corps (9) en matériau composite à matrice organique, la face interne du bord de protection (30) étant fixée par collage sur le corps (9), et le bord de protection (30) définissant le bord d'attaque (16) de l'aube (10).

11. Aube selon la revendication 10, cette aube (10) étant une aube de soufflante de turbomachine aéronautique.

12. Turbomachine comprenant une aube (10) selon la revendication 10.

## Patentansprüche

1. Verfahren zur Herstellung einer Schutzkante, welche dazu bestimmt ist, eine Vorderkante einer Schaufel zu bilden, bei dem:
eine Schutzkante (30) aus anodisierbarem Metall bereitgestellt wird, wobei die Schutzkante eine Außenseite und eine Innenseite, welche einander gegenüberliegen, aufweist, wobei die Außenseite dazu ausgelegt ist, eine aerodynamische Fläche der Schaufel zu definieren, und wobei die Innenseite dazu ausgelegt ist, auf einen Körper der Schaufel geklebt zu werden, um die Vorderkante der Schaufel zu bilden, und
diese Schutzkante (30) einer elektrolytischen Mikrolichtbogen-Oxidationsbehandlung unterzogen wird, die sowohl auf die Innenseite als auch auf die Außenseite der Schutzkante angewendet wird.

2. Verfahren nach Anspruch 1, bei dem die Schutzkante (30) eine Außenseite (31) aufweist, die teilweise die aerodynamische Fläche der Schaufel (10) definiert, und bei dem die Außenseite (31) nach der elektrolytischen Mikrolichtbogen-Oxidationsbehandlung poliert wird.

3. Verfahren nach Anspruch 1 oder 2, bei dem die Schutzkante (30) auf einen Körper (9) einer Schaufel geklebt wird.

4. Verfahren nach einem der Ansprüche 1 bis 3, bei dem die elektrolytische Mikrolichtbogen-Oxidationsbehandlung die folgenden Schritte umfasst:
- die Schutzkante (30) wird in ein elektrolytisches Bad (3) eingetaucht, wobei die Schutzkante eine erste Elektrode bildet,
- eine zweite Elektrode (4) wird in das elektrolytische Bad eingetaucht, und
- an die erste und an die zweite Elektrode wird eine Spannung angelegt.

5. Verfahren nach Anspruch 4, bei dem beim Anlegen der Spannung ein Strom auferlegt wird, dessen Stärke Impulse aufweist.

6. Verfahren nach Anspruch 4 oder 5, bei dem die zweite Elektrode (4) in dem elektrolytischen Bad (3) gegenüber der Innenseite (32) der Schutzkante angeordnet ist.

7. Verfahren nach einem der Ansprüche 1 bis 6, bei dem die Schutzkante (30) aus Titan oder aus Titanlegierung besteht.

8. Verfahren nach einem der Ansprüche 1 bis 7, bei dem der Schaufelkörper (9) aus Verbundwerkstoff mit organischer Matrix gebildet ist.

9. Schutzkante, die nach dem Verfahren von einem der Ansprüche 1 bis 8 hergestellt ist, wobei die Schutzkante aus anodisierbarem Metall eine Außenseite und eine Innenseite, welche einander gegenüberliegen, aufweist, wobei die Außenseite dazu ausgelegt ist, eine aerodynamische Fläche der Schaufel zu definieren, und wobei die Innenseite dazu ausgelegt ist, auf einen Körper der Schaufel geklebt zu werden, um die Vorderkante der Schaufel zu bilden.

10. Schaufel, umfassend eine Schutzkante nach Anspruch 9 und einen Körper (9) aus Verbundwerkstoff mit organischer Matrix, wobei die Innenseite der Schutzkante (30) an dem Körper (9) festgeklebt ist, und wobei die Schutzkante (30) die Vorderkante (16) der Schaufel (10) definiert.

11. Schaufel nach Anspruch 10, wobei diese Schaufel (10) eine Gebläseschaufel einer Luftfahrt-Turbomaschine ist.

12. Turbomaschine, die eine Schaufel (10) nach Anspruch 10 umfasst.

## Claims

1. A method of manufacturing a protective edge configured to form the leading edge of a blade, wherein:
a protective edge (30) made of an anodizable metal is provided, the protective edge having an inner face and an outer face opposed to each other, the outer face being configured to define an aerodynamic surface of the blade, and the inner face being configured to be glued on a blade body so as to form the leading edge of the blade; and
this protective edge (30) undergoes a micro-arc oxidation electrolytic treatment which is applied on both the inner face and the outer face of the protective blade.

2. The method according to claim 1, wherein the protective edge (30) has an outer face (31) defining in part the aerodynamic surface of the blade (10), and wherein the outer face (31) is polished after the micro-arc oxidation electrolytic treatment.

3. The method according to claim 1 or 2, wherein the protective edge (30) is glued on a blade body (9).

4. The method according to any one of claims 1 to 3, wherein the micro-arc oxidation electrolytic treatment comprises the following steps:
- the protective edge (30) is immersed in an electrolytic bath (3), the protective edge forming a first electrode,
- a second electrode (4) is immersed in the electrolytic bath, and
- a voltage is applied to the first and second electrodes.

5. The method according to claim 4, wherein when the voltage is applied, a current is imposed whose intensity has pulses.

6. The method according to claim 4 or 5, wherein the second electrode (4) is arranged in the electrolytic bath (3) facing the inner face (32) of the protective edge.

7. The method according to any one of claims 1 to 6, wherein the protective edge (30) is made of titanium or titanium alloy.

8. The method according to any one of claims 1 to 7, wherein the blade body (9) is made of an organic matrix composite material.

9. A protective edge manufactured using the method according to any one of claims 1 to 8, said protective edge made of an anodizable metal having an inner face and an outer face opposed to each other, the outer face being configured to define an aerodynamic surface of the blade, and the inner face being configured to be glued on a blade body so as to form the leading edge of the blade.

10. A blade comprising a protective edge according to claim 9 and a body (9) made of an organic matrix composite material, the inner face of the protective edge (30) being secured by gluing on the body (9), and the protective edge (30) defining the leading edge (16) of the blade (10).

11. The blade according to claim 10, this blade (10) being a fan blade of an aeronautical turbomachine.

12. A turbomachine comprising a blade (10) according to claim 10.
